# DEMANDE DE BREVET EUROPEEN

(11) **EP 4 033 448 A1**
(43) Date de publication de la demande: **27.07.2022**
(21) Numéro de dépôt: 22152266.7
(22) Date de dépôt: 19.01.2022
(51) Int. Cl.: G06T 7/73

(54) **MÉTHODE DE SUIVI DU DÉPLACEMENT DE BLOCS PRÉFABRIQUÉS D'UNE CARAPACE D'UNE DIGUE**

(30) Priorité: 20.01.2021 FR 2100533
(71) Demandeur: Soletanche Freyssinet, 92500 Rueil Malmaison (FR)
(72) Inventeur: NGO, David Tran-Thanh, 38100 Grenoble (FR); GARDON, Elisabeth Marie, 38850 Charavine (FR); ROBERT, Natacha Lola Élise Angèle, 38000 Grenoble (FR)
(74) Mandataire: Nony

(57) **Abrégé**

Méthode de suivi du déplacement de blocs préfabriqués d'une carapace d'une digue Procédé de génération d'un modèle 3D d'une carapace (5) de blocs (15) préfabriqués en matériau cimentaire, le procédé étant mis en œuvre par ordinateur et comportant :
a) la fourniture d'un nuage de points (25) représentant partiellement la carapace (5),
b) la segmentation du nuage de points en régions homogènes (80) représentant au moins une partie d'un des blocs (15) discrétisés dans le nuage de points,
c) l'agrégation d'au moins deux des régions homogènes (80) qui sont adjacentes pour former une région candidate (100),
d) l'appariement de ladite région candidate (100) avec un objet-modèle 3D (105) représentant au moins une partie d'un bloc (15), et
e) l'enregistrement, dans le modèle 3D de la carapace, de la position et de l'orientation de l'objet-modèle 3D apparié à l'étape d).

## Description

### Domaine technique

L'invention concerne un procédé de modélisation d'une carapace de blocs préfabriqués par traitement de données acquises sur la carapace. Elle concerne encore une méthode pour déterminer le déplacement, c'est-à-dire la variation de position et d'orientation, des blocs de la carapace au cours du temps.

### Technique antérieure

Les digues à talus maritimes protègent des cyclones, des inondations, voire des tsunamis. Elles sont par ailleurs résistantes à l'érosion due à la houle.

Pour former de telles digues à talus, il est connu de revêtir un talus d'une carapace monocouche ou multicouche formée de blocs préfabriqués en béton. La carapace atténue l'effet de la houle en brisant les vagues en une multitude de flux d'eau de mer qui diffusent au sein de la carapace.

Deux familles de blocs sont connues pour former des carapaces. Une première famille est formée de blocs présentant une forme géométrique simple creuse ou pleine, par exemple cubique ou prismatique. Les blocs de cette première famille sont généralement destinés à être empilés de manière régulière. Une deuxième famille est formée de blocs aux formes plus complexes, qui par exemple présentent des branches s'étendant dans des directions différentes. Parmi les blocs de cette deuxième famille, on peut citer les Accropodes^{®}, Accropodes II^{®}, Cubipod^{®}, Core-loc II^{®}, Ecopode^{®}, Tetrapode^{™}, Xbloc^{®} et Crablock^{®}. Les blocs de cette deuxième famille sont généralement disposés ligne par ligne et en quinconce selon un plan de pose préétabli. Ils peuvent toutefois être imbriqués de manière irrégulière au sein de la carapace, à cause des imprécisions lors du positionnement des blocs. La résistance mécanique de la carapace aux contraintes exercées par la houle provient notamment des forces résultant du contact entre les branches des blocs.

Les blocs peuvent bouger les uns par rapport aux autres au cours du temps, notamment lors de tempêtes, de cyclones, ou de tremblement de terre, aux cours desquels les contraintes exercées par la houle sur les blocs sont amplifiées.

Le mouvement excessif des blocs les uns par rapport aux autres peut résulter, dans les cas extrêmes, en la rupture de la digue et/ou dans l'endommagement d'une structure portée par la digue, par exemple une route, un bâtiment ou un ouvrage d'art.

Cependant, les déplacements des blocs sont généralement faibles au regard de la taille de la carapace, qui peut s'étendre en bande sur plusieurs kilomètres de long et sur une largeur pouvant atteindre plusieurs dizaines de mètres. Par exemple, à la suite d'un cyclone, un bloc peut avoir été déplacé de quelques centimètres, ce qui est faible au regard de sa taille, qui est généralement supérieure à plusieurs mètres. En outre, une carapace peut comporter plusieurs centaines, voire plusieurs milliers de blocs de forme identique, disposés aléatoirement si bien qu'il est difficile de mesurer le faible déplacement de chaque bloc d'une carapace. Il est en outre particulièrement coûteux d'identifier chaque bloc et de l'instrumenter pour mesurer son déplacement.

Il existe donc un besoin pour faciliter l'identification des blocs préfabriqués au sein d'une carapace et pour suivre simplement l'évolution de la carapace au cours du temps, notamment en vue de prévenir des dommages décrits ci-dessus.

L'invention propose un procédé de génération d'un modèle 3D d'une carapace de blocs préfabriqués en matériau cimentaire, le procédé étant mis en œuvre par ordinateur et comportant :
a) la fourniture d'un nuage de points représentant partiellement la carapace,
b) la segmentation du nuage de points en régions homogènes représentant au moins une partie d'un des blocs discrétisés dans le nuage de points,
c) l'agrégation d'au moins deux des régions homogènes qui sont adjacentes pour former une région candidate,
d) l'appariement de ladite région candidate avec un objet-modèle 3D représentant au moins une partie d'un bloc, et
e) l'enregistrement, dans le modèle 3D de la carapace, de la position et de l'orientation de l'objet-modèle 3D apparié à l'étape d).

Le procédé selon l'invention permet de modéliser simplement un bloc de la carapace par identification des points correspondants à une partie du bloc dans le nuage de points et par attribution d'un objet-modèle 3D qui représente le bloc. Une fois le bloc identifié, il est ainsi possible de suivre son évolution entre différents instants au sein de la carapace, indépendamment des autres blocs de la carapace.

De préférence, le procédé comporte postérieurement à l'étape e), la réitération des étapes c) à e) avec une autre région candidate afin d'apparier un objet-modèle représentant un autre des blocs de la carapace.

Il est ainsi possible de modéliser plusieurs blocs de la carapace, voire l'intégralité des blocs représentés dans le nuage de points de la carapace. De préférence, les étapes c) à e) sont réitérées jusqu'à ce que plus de 30%, de préférence plus de 50 %, de préférence plus de 70 %, de préférence plus de 80 %, de préférence plus de 90 %, voire 100 % des blocs de la carapace sont modélisés au moyen chacun d'un objet-modèle correspondant.

De préférence, afin d'accélérer le traitement numérique, le procédé comporter en outre, postérieurement à l'étape e), d'appariement, la suppression de la région candidate, le cas échéant agrandie comme cela sera décrit par la suite, du nuage de points.

Avantageusement, la mise en œuvre par ordinateur du procédé permet d'automatiser la génération des régions candidates, la réalisation de l'appariement et l'enregistrement de l'objet-modèle, sans intervention indispensable d'un utilisateur pour effectuer ces étapes. Notamment, la mise en œuvre du procédé ne requiert que l'objet-modèle 3D du bloc et un nuage de points de la carapace. Elle ne requiert pas la connaissance préalable du plan de pose des blocs pour former la carapace.

### Carapace et blocs

La carapace peut représenter une partie immergée et une partie émergée. Le nuage de points peut comporter des coordonnées de points des blocs immergés et des coordonnées de blocs émergés.

La carapace peut comporter un arrangement des blocs qui est ordonné ou irrégulier.

La carapace peut être constituée de blocs identiques ou de blocs différents.

La carapace peut s'étendre sur une longueur supérieure à 50 m, voire supérieure à 100 m, voire supérieure à 500 m, voire supérieure à 1000 m, voire supérieure à 10000 m.

Les blocs préfabriqués sont en matériau cimentaire. Par matériau cimentaire, on entend un matériau comportant un liant hydraté. Le liant hydraté est par exemple un ciment Portland ou un liant hydraté à base de laitier de haut-fourneau.

Les blocs préfabriqués peuvent être en béton non armé ou en béton armé. Ils peuvent être plein ou creux. La longueur d'un bloc peut être comprise entre 1 m et 5 m. Le volume d'un bloc est par exemple compris entre 1 m³ et 30 m³.

Les blocs préfabriqués peuvent présenter une forme compacte ou élancée.

Les blocs préfabriqués peuvent présenter une forme générale branchée. Par exemple, ils peuvent présenter un noyau à partir duquel des protubérances, notamment des branches, font saillie et s'étendent vers l'extérieur.

En variante, les blocs préfabriqués peuvent présenter une forme massive polyédrique, par exemple choisie parmi ;
- une forme prismatique, notamment cubique, parallélépipèdique ou à base hexagonale, comme par exemple le bloc préfabriqué connu sous l'appellation « Seabee »,
- une forme tronconique à base polygonale, notamment carrée, et dont les faces latérales peuvent être rainurées.

En variante, les blocs préfabriqués peuvent présenter une forme d'élément de treillis. Par exemple, ils peuvent être formés de barreaux de béton reliés entre eux par des sommets, comme par exemple le bloc « Cob », le bloc « Shed » ou le bloc « Diahitis ».

En particulier, les blocs préfabriqués peuvent chacun être choisi parmi :
- un bloc connu sous l'appellation « tétrapode^{®} »,
- un bloc tel que décrit dans FR 2 449 164 A1 ou dans FR 2 647 135 A1, incorporés par référence, commercialisé sous la référence « Accropode^{®} » par la société Artelia,
- un bloc tel que décrit dans FR 2 791 370 A1, incorporé par référence, commercialisé la référence « Accropode II^{®} » par la société Artelia,
- un bloc tel que décrit dans FR 2 748 044 A1, incorporé par référence, commercialisé sous la référence « Ecopode^{®} » par la société Artelia,
- un bloc tel que décrit dans EP 0 583 500 A1, incorporé par référence, connu sous l'appellation « A-Jack^{®} »,
- un bloc tel que décrit dans WO 95/09279 A1, incorporé par référence, connu sous l'appellation « Core loc^{®} »,
- un bloc tel que décrit dans WO 2004/009910 A2, incorporé par référence, connu sous l'appellation « Xbloc^{®} »,
- un bloc tel que décrit dans US 2010/258704 A1, incorporé par référence, connu sous l'appellation « Cubipod^{®} »,
- un bloc tel que décrit dans l'article « First Tests on the Symmetrical Breakwater Armor Unit Crablock », M. Salaudin et al., Coastal Engineering Journal 59(04), doi: 10.1142/S0578563417500206, incorporé par référence, connus sous l'appellation « Crablock », et
- un bloc connu sous l'appelation « Core-loc 2 ».

### Nuage de points

Le nuage de points représente partiellement la carapace. En particulier, comme cela apparaîtra clairement par la suite, seule la partie de la carapace qui est visible par un dispositif d'acquisition peut être acquise.

Le nuage de points peut représenter la partie immergée de la carapace et/ou la partie émergée de la carapace.

Dans une variante de mise en œuvre, le procédé peut comporter une étape préalable d'acquisition du nuage de points.

L'acquisition du nuage de points de la carapace peut comporter :
- une acquisition d'au moins un nuage de points de la partie émergée de la carapace et/ou une acquisition d'au moins un nuage de points de la partie immergée de la carapace,
- optionnellement, la fusion du nuage de points de la partie émergée et du nuage de points de la partie immergée.

Un tel nuage de points peut comporter une distribution spatiale des points hétérogène, qui résulte de la mise en œuvre de différentes techniques d'acquisition. En outre, l'imprécision de la mesure attribuée à chaque point peut aussi être distribuée spatialement de manière hétérogène. Elle varie par exemple de 1 cm à 10 cm. Par ailleurs, le nuage de points peut comporter un bruit de mesure, c'est-à-dire qu'il peut comporter des points qui ne correspondent pas un élément matériel de la carapace. Le bruit de mesure peut être notamment élevé dans la partie du nuage de points qui représente la partie de ligne d'eau de la carapace. La « ligne d'eau de la carapace » correspond à la partie de la carapace formée des blocs qui sont partiellement immergés, c'est-à-dire des blocs qui présentent une portion immergée dans l'eau et une partie émergée au contact de l'air. Le procédé selon l'invention présente l'avantage de s'affranchir de ces hétérogénéités et du bruit de mesure qui n'altèrent sensiblement pas son efficacité.

Le nuage de points de la partie immergée de la carapace et le nuage de point de la partie émergée de la carapace peuvent présenter des densités de points différentes et/ou des précisions de mesure des positions des points différentes.

Le nuage de points peut être acquis au moyen d'au moins un dispositif d'acquisition comportant un appareil de télédétection optique, par exemple un lidar, et/ou un appareil de télédétection acoustique et/ou un appareil d'acquisition photogrammétrique.

Le dispositif d'acquisition peut être un engin volant, par exemple un satellite, un avion ou un drone, l'engin volant comportant un appareil de télédétection optique et/ou un appareil d'acquisition photogrammétrique. L'engin volant peut survoler la carapace, et l'appareil peut acquérir un nuage de point de la partie émergée de la carapace. De préférence, l'appareil de télédétection optique est orienté verticalement vers le bas pour acquérir de manière nadirale la partie émergée de la carapace. Le cas échéant, lorsque cela est possible, l'appareil de télédétection optique peut être orienté obliquement pour acquérir un nombre plus élevé de points afin de former un nuage représentant plus finement la carapace. Le dispositif d'acquisition peut être un engin terrestre, par exemple une grue de chantier et l'appareil de télédétection et/ou l'appareil d'acquisition photogrammétrique est monté sur la grue, par exemple sur la flèche de la grue, de manière à acquérir le nuage de points de la partie émergée de la carapace qu'il surplombe. L'engin terrestre peut être statique ou mobile.

Le dispositif d'acquisition peut être un navire comportant :
- un appareil de télédétection optique, de préférence un lidar, orienté de manière à acquérir un nuage de points de la partie de ligne d'eau de la carapace, et/ou
- un appareil de télédétection acoustique, par exemple un sondeur bathymétrique pour acquérir un nuage de points de la partie immergée de la carapace.

Plus de cinq, voire plus de dix, voire plus de cinquante, voire plus de mille blocs, voire plus de cinq mille blocs peuvent être représentés dans le nuage de points.

Le nuage de points peut comporter plus entre cent mille et dix millions de points, pour faciliter son traitement. A chaque point sont attribuées des coordonnées tridimensionnelles. Les coordonnées des points sont référencées dans un référentiel local ou, de préférence, dans un référentiel absolu. Par « référentiel absolu » on désigne un référentiel géodésique dans lequel on peut définir la localisation d'un objet sur terre de manière univoque. Son centre est par exemple proche du barycentre de la terre, ses deux premiers axes sont dans le plan de l'équateur et son troisième axe est proche de l'axe de rotation de la terre. Le référentiel absolu pouvant être utilisé dans le cadre de la présente invention est de préférence choisi parmi les suivants : Réseau Géodésique Français 1993 (RGF93), World Geodetic System (WGS84), International Terrestrial Rotational Service (ITRS) ou European Terrestrial Reference System (ETRS).

Le nuage de point peut être enregistré sur un moyen de stockage informatique lisible par ordinateur. Un moyen de stockage informatique est un support d'enregistrement numérique tel qu'une bande magnétique, un disque optique, un disque dur, un disque SSD, une carte SD ou une clé USB.

### Régions candidates

L'étape b) comporte la segmentation du nuage de points pour former des régions homogènes. Les régions homogènes sont formées de points du nuage.

La « segmentation » est une technique bien connue de traitement d'un nuage de points. Elle consiste à partitionner le nuage en regroupant des points en sous-ensembles, dénommés régions homogènes, qui sont caractérisées par une cohérence spatiale et/ou géométrique. De tels sous-ensembles peuvent être dénommés « segments » dans la littérature.

Par « cohérence spatiale », on entend par exemple que les points de la région homogène sont contenus dans un unique ensemble non-disjoint. Par « cohérence géométrique », on entend par exemple le fait que les points de la région sont disposés sensiblement sur un même plan ou une même surface courbe paramétrée.

De préférence, l'étape b) comporte :
- la voxelisation du nuage de points,
- la formation de groupes de voxels non disjoints et cohérents spatialement, par exemple au moyen d'une méthode de partitionnement « *k*-moyennes », et
- la génération des régions homogènes à partir des groupes de voxels.

Des groupes de voxels « non-disjoints » sont tels que tous les voxels qu'ils comportent sont reliés les uns aux autres, soit directement en étant adjacents les uns avec les autres par au moins une face ou par au moins un sommet, soit indirectement par l'intermédiaire d'une suite de voxels du groupe qui sont adjacents les uns aux autres.

Une telle technique de segmentation d'un nuage de points comportant une étape de voxelisation dudit nuage est décrite par exemple dans l'article « Segmentation of 3D Point Cloud Data Based on Supervoxel Technique », R.S Rampriya et R. Suganya, Procedia Computer Science, Volume 171, 2020, Pages 427-435, doi : 10.1016/j.procs.2020.04.045, incorporé par référence.

De préférence, la voxelisation comporte :
- l'application d'une grille tridimensionnelle de voxels, c'est-à-dire de mailles cubiques de même dimensions, sur le nuage de points, et
- l'attribution d'une caractéristique à un voxel lorsque les coordonnées d'au moins un point du nuage sont incluses dans le voxel. La caractéristique du voxel est par exemple un label binaire qui vaut 0 lorsque aucun point du nuage n'est inclus dans le voxel et 1 dans le cas contraire.

Avantageusement, seules les coordonnées des points du nuage sont requises pour générer le modèle 3D en fin d'étape e). Le procédé peut ainsi s'affranchir d'autres potentielles données du nuage de points, par exemple l'intensité ou la couleur du point.

En outre, la taille des voxels peut être adaptée automatiquement, ou par l'opérateur mettant en œuvre la voxelisation, en fonction de la densité du nuage de points. Par exemple, le côté d'un voxel est compris entre 1 cm et 20 cm. La taille des voxels peut être comprise entre 1 fois et 2 fois, par exemple être d'environ 1,5 fois, la distance moyenne entre deux points du nuage de points.

De préférence, la segmentation du nuage de points comporte la génération de régions homogènes en mettant en œuvre la technique de segmentation VCCS. Selon la technique de segmentation VCCS, les régions homogènes sont dénommées « super-voxels ».

La technique de segmentation VCCS, acronyme de « Voxel Cloud Connectivity Segmentation », est décrite en détail dans l'article « Voxel Cloud Connectivity Segmentation - Supervoxels for Point Clouds », J. Papon, A. Abramov, M. Schoeler, F. Wörgötter, Proceedings of the 2013 IEEE Conférence on Computer Vision and Pattern Récognition ; 23-28 juin 2013, doi : 10.1109/CVPR.2013.264, incorporé par référence. La segmentation VCCS présente l'avantage de pouvoir être adaptée automatiquement à la densité de points du nuage. Elle est notamment disponible dans la libraire PCL (acronyme de « Point Cloud Library ») en langage C++, dédiée au traitement de nuages de points 3D.

A l'étape d), on agrège au moins deux des régions homogènes qui sont adjacentes pour former une région candidate.

De préférence, chaque région candidate comporte une région homogène et de préférence toutes les régions homogènes qui lui sont adjacentes. Deux régions homogènes « adjacentes » partagent au moins une frontière commune.

La formation de la région candidate est de préférence effectuée au moyen d'un graphe d'adjacence qui résulte de la mise en œuvre de la technique de segmentation VCCS. Le graphe d'adjacence peut comporter pour chaque région homogène, le centre de la région homogène, la liste des sommets de la région homogène qui sont partagés avec des région homogène adjacentes, et la liste des centres des régions homogènes adjacentes.

### Appariement

A l'étape d), l'appariement de la région candidate vise à déterminer la position et l'orientation, dans le référentiel du nuage de points, d'un objet-modèle représentant au moins une partie d'un bloc. L'objet modèle peut représenter entièrement un bloc. De préférence, il représente une portion du bloc, ce qui améliore l'appariement. L'appariement comporte la mise en correspondance de la forme de la région candidate avec la forme de l'objet-modèle prise comme référence.

L'objet-modèle 3D peut être un nuage de points ou un maillage ou, de préférence, défini au moyen de données géométriques vectorielles. De préférence, l'objet-modèle est élaboré par conception assistée par ordinateur, par exemple au moyen d'un logiciel tel AutoCAD^{®}, Revit^{®} commercialisés par la société AutoDesk^{®}, SolidWorks^{®} et Catia^{®} commercialisés par la société Dassault Systèmes. L'objet-modèle peut ainsi représenter simplement et fidèlement en tout ou partie un bloc de la carapace.

L'objet-modèle peut notamment être repéré, dans le référentiel du nuage de points, au moyen de la position de son barycentre et de l'orientation de ses axes principaux.

De préférence, à l'étape d), la région candidate et l'objet-modèle sont mis en correspondance au moyen d'un descripteur de forme de la région candidate et d'un descripteur de forme de l'objet-modèle.

De préférence, la mise en correspondance de la région candidate avec l'objet-modèle est effectuée par mise en œuvre d'une technique de mise en correspondance dénommée « Fast Global Registration », décrite dans Zhou, Q.-Y et al., Computer Vision - ECCV 2016, Lecture Notes in Computer Science, Vol. 9906, 766-782 - September 2016, doi: 10.1007/978-3-319-46475-6_47, incorporé par référence.

Le descripteur local de la région candidate est un ensemble de caractéristiques qui décrivent les propriétés modèles de la forme représentée par la région candidate. Il peut être défini à partir de points d'intérêt de la région candidate, auxquels sont notamment associés des attributs qui décrivent l'environnement des points d'intérêts correspondant. De tels point d'intérêts sont aussi connus sous la dénomination « keypoints » en terminologie anglaise.

De nombreux descripteurs de forme d'un ensemble de points sont connus, par exemple de l'article « Evaluation of Local 3-D Point Cloud Descriptors in Terms of Suitability for Object Classification », J. Garstka, G. Peters, ICINCO 2016, doi: 10.5220/0006011505400547, incorporé par référence, et des méthodes de détection de points d'intérêts sont aussi connues, par exemple décrites dans la thèse de A. Shaiek, *« Reconnaissance d'objets 3D par points d'intérêt* », Ecole Nationale Supérieure des Mines de Paris, 2013, incorporée par référence.

Les points d'intérêt peuvent être détectés au moyen d'un détecteur de point d'intérêt choisi parmi un détecteur ISS, un détecteur SIFT, un détecteur de Harris, un détecteur SUSAN et un détecteur AGAST.

En particulier, le détecteur de point d'intérêt peut être un détecteur ISS, acronyme de « Intrinsic Shape Signature », tel que décrit dans l'article « Intrinsic Shape Signatures : A shape descriptor for 3D Object Récognition », Yu Zhong, International Conférence on Computer Vision Workshops (ICCV Workshops), 2009, doi : 10.1109/ICCVW.2009.5457637.

Un descripteur de forme de la région candidate peut être choisi parmi un descripteur FPFH, acronyme anglais de « Fast Point Feature Histograms », un descripteur PFH, acronyme anglais de « Point Feature Histogram », un descripteur LFSH, acronyme anglais de « Local Feature Statistic Histograms » et un descripteur VFP, acronyme anglais de « Viewpoint Feature Histogram ».

En particulier, le descripteur de forme de la région candidate peut être un descripteur FPFH. Le descripteur FPFH est décrit dans l'article *«* Fast Point Feature Histogram (FPFH) for 3D registration », R.B. Rusu et al., Proceedings of the IEEE International Conférence on Robotics and Automation, 2009, pages 3212-3217, doi : 10.1109/ROBOT.2009.5152473, incorporé par référence.

Par ailleurs, le descripteur de forme de l'objet-modèle comporte un ensemble de paramètres qui discrétise localement la forme de l'objet.

En particulier, le descripteur de forme de l'objet-modèle peut être déterminé en générant un nuage de points représentant au moins une partie de l'objet-modèle, dit objet-modèle discrétisé, en définissant des points d'intérêt dans l'objet-modèle discrétisé, puis en calculant des descripteurs de points d'intérêt pour chaque points d'intérêt, le descripteur de forme de l'objet-modèle comportant les descripteurs de points d'intérêt.

Par ailleurs, à l'étape d) d'appariement, la mise en correspondance de la région candidate avec l'objet-modèle peut comporter la minimisation de l'écart entre la région candidate et l'objet-modèle. De préférence, la minimisation est opérée par mise en œuvre d'un algorithme du point itératif le plus proche, aussi connu sous la dénomination d'algorithme ICP, acronyme anglais de « Iterative Closest Point ».

L'étape d'appariement peut en outre comporter une validation de la mise en correspondance, notamment par comptage du nombre de points de la région candidate inclus dans le volume de l'objet-modèle et comparaison dudit nombre de points à un seuil prédéterminé. Si le nombre de points est inférieur audit seuil, alors l'appariement est considéré comme concluant. Le cas contraire, l'appariement est considéré comme non concluant. La région candidate est considérée comme n'étant pas identifiable et aucun enregistrement n'est effectué à l'étape d).

De préférence, afin d'améliorer la précision de la position et de l'orientation du bloc apparié, l'étape d) d'appariement comporte, de préférence postérieurement à la validation de la mise en correspondance, une optimisation de la mise en correspondance de l'objet-modèle 3D avec la région candidate.

De préférence, ladite optimisation comporte l'agrandissement de l'aire de la région candidate en mettant en œuvre au moins un cycle d'optimisation comportant :
i) l'agrégation à la région candidate d'au moins une, voire de plusieurs régions homogènes qui lui sont adjacentes,
ii) la minimisation de l'écart entre la région candidate ainsi agrandie et l'objet-modèle, de préférence au moyen d'un algorithme ICP tel que décrit ci-dessus, et
iii) le calcul d'un résidu de minimisation dudit écart,
le cycle d'optimisation étant réitéré avec une ou plusieurs autres régions homogènes et avec la région candidate agrandie à l'étape ii) tant que ledit résidu calculé l'étape iii) est inférieur à un seuil prédéterminé, par exemple compris entre 1 mm et 15 mm.

Lorsque le résidu de minimisation est supérieur au seuil prédéterminé, la région homogène agrégée à l'étape i) est considérée comme ne représentant pas le même bloc préfabriqué dans le nuage de points que la région candidate préalablement à l'étape i). L'optimisation de la mise en correspondance est alors arrêtée.

A l'inverse, lorsque le résidu de minimisation est inférieur au seuil prédéterminé, il est considéré que les points de la ou des régions adjacentes agrégées à l'étape i) représentent, dans le nuage de points, le même bloc préfabriqué que la région candidate préalablement à l'étape i). Outre le fait d'identifier d'autres régions homogènes représentant un même bloc préfabriqué, la minimisation de l'écart permet d'améliorer la précision de la position et de l'orientation de l'objet-modèle 3D.

Par ailleurs, une fois le résidu supérieur au seuil prédéterminé, l'optimisation peut comporter le calcul de la visibilité du bloc, l'optimisation étant considérée optimale lorsque la visibilité est supérieure à un seuil de visibilité prédéterminé, de préférence compris entre 10 % et 25 %.

### Enregistrement dans le modèle 3D

A l'étape e), les coordonnées d'au moins un point et au moins un paramètre d'orientation de l'objet-modèle dans le référentiel du nuage de points sont enregistrées.

Le modèle 3D peut être enregistré sur un moyen de stockage informatique lisible par ordinateur.

Par exemple, les coordonnées du barycentre de l'objet modèle sont enregistrées dans ledit référentiel.

Le paramètre d'orientation peut être une paire axe-angle, c'est-à-dire comportant un angle α et les coordonnées d'un vecteur normé autour duquel s'effectue la rotation d'angle α pour orienter un référentiel lié à l'objet modèle dans le référentiel du nuage de points. Il peut être un ensemble d'angles, par exemple de roulis, tangage et lacet qui peuvent définir l'orientation du référentiel lié à l'objet-modèle par rapport aux axes du référentiel du nuage de points.

Le paramètre d'orientation peut être un triplet d'angle d'Euler définissant l'orientation d'un référentiel lié à l'objet modèle, par exemple formé des axes principaux de l'objet modèle, par rapport au référentiel du nuage de points.

Par ailleurs, le procédé peut en outre comporter l'attribution d'un identifiant, par exemple alphanumérique, par exemple un nom, à l'objet modèle. L'identifiant permet ainsi de faciliter l'identification ultérieure d'un bloc de la carapace.

De préférence, les étapes c) à e) sont mises en œuvre pour plusieurs régions candidates, de préférence pour toutes les régions candidates. Le procédé selon l'invention permet ainsi d'apparier automatiquement de nombreuses régions candidates et d'enregistrer les objets-modèles correspondants lorsque les tests d'appariement correspondants sont concluants.

Le procédé est apte à identifier et à modéliser la plupart, voire tous les blocs qui ont été acquis dans le nuage de points. Le procédé peut être tel que le test d'appariement c) est concluant pour plus de 80 %, voire plus de 90 %, voire plus de 95 % des régions candidates testées. Notamment, le modèle 3D peut comporter des objets-modèles représentant plus de 80 %, voire plus de 90 %, voire plus de 95 % des blocs représentés dans le nuage de points.

En outre, le procédé selon l'invention est particulièrement robuste, au sens où des blocs représentés partiellement par un faible nombre de points dans le nuage peuvent être représentés intégralement par des objets-modèles dans le modèle 3D de la carapace. En particulier, des blocs peuvent être partiellement masqués par des blocs voisins à la vue d'un observateur regardant la carapace, par exemple de manière nadirale selon un lieu d'observation surélevé par rapport à la carapace. Au moins une partie de la population des blocs représentés dans le nuage de points peut être représentée intégralement par des objets-modèle dans le modèle 3D de la carapace.

En particulier, la visibilité moyenne des blocs représentés dans le nuage de points peut être comprise entre 25 % et 35 %. De préférence, les blocs représentés dans le nuage de points et qui présentent une visibilité inférieure à 20 %, voire inférieure à 15 %, mieux inférieure à 10 % peuvent être représentés intégralement par des objets-modèle dans le modèle 3D de la carapace. La « visibilité » d'un bloc correspond à l'aire de la surface de la portion du bloc représenté dans le nuage de points, divisée par l'aire totale de la surface du bloc. La visibilité moyenne des blocs est la moyenne arithmétique des visibilités des blocs.

De préférence, au moins 90 %, voire au moins 95 %, mieux 100 % en nombre des blocs représentés dans le nuage de points qui présentent une visibilité supérieure ou égale à 25 %, voire supérieure ou égale à 20 % sont représentés dans le modèle 3D de la carapace.

Par ailleurs, l'invention concerne une méthode de suivi du déplacement des blocs d'une carapace, comportant :
- la mise en œuvre du procédé selon l'invention en fournissant à l'étape a) un premier nuage de points représentant la carapace à un premier instant, afin de générer un premier modèle 3D de la carapace,
- la mise en œuvre du procédé selon l'invention en fournissant à l'étape a) un deuxième nuage de points représentant la carapace à un deuxième instant, afin de générer un deuxième modèle 3D de la carapace, et
- le calcul du déplacement d'au moins un, de préférence de tous les objets-modèle appariés communs aux premier et deuxième modèles 3D entre les premier et deuxième instants.

La méthode de suivi permet d'étudier l'évolution du mouvement de l'ensemble des blocs d'une carapace au cours du temps. Par exemple, la méthode de suivi permet d'observer les effets d'une tempête ou d'un cyclone sur la carapace. Une telle observation est en particulier utile pour :
- les concepteurs de blocs, puisqu'elle leur permet d'évaluer *in situ* le comportement d'un ensemble de blocs et d'envisager des modifications de la forme de blocs le cas échéant pour former de futures carapaces,
- les sociétés réalisant la pose des blocs sur chantier, puisqu'elle leur permet d'évaluer l'opportunité de modifier la manière de disposer les blocs les uns par rapport aux autres pour des chantiers futurs,
- les gestionnaires des digues afin d'évaluer les risques potentiels d'endommagement de la digue.

Par « déplacement » d'un objet modèle, on considère la variation de position d'un point caractéristique, par exemple le barycentre, et la variation d'orientation de l'objet modèle. Notamment, dans le cas de blocs « Accropodes II^{®} », des variations de position inférieures à 10 cm, voire inférieure à 5 cm, et des variations de roulis, de tangage et de lacet inférieure à 5°, voire inférieure à 2° peuvent être mesurées au moyen du procédé selon l'invention.

L'invention concerne encore une méthode de génération d'un modèle 3D consolidé d'une carapace, comportant :
- la mise en œuvre du procédé selon l'invention en fournissant à l'étape a) un premier nuage de points représentant une première portion de la carapace, afin de générer un premier modèle 3D de la carapace,
- la mise en œuvre du procédé selon l'invention en fournissant à l'étape a) un deuxième nuage de points représentant une deuxième portion de la carapace connexe à la première portion de la carapace, afin de générer un deuxième modèle 3D de la carapace, et
- l'assemblage des premier et deuxième modèles 3D pour former le modèle 3D consolidé.

Le premier nuage de points peut représenter une portion de la carapace à une première étape de la construction de cette dernière et le deuxième nuage de points peut représenter au moins une autre partie de la carapace, à une deuxième étape de la construction postérieure à la première.

La méthode de génération permet ainsi de mettre à jour le modèle 3D de la carapace au fur et à mesure de la pose des blocs.

L'invention concerne aussi un ordinateur pour mettre en œuvre le procédé selon l'invention et/ou la méthode de suivi selon l'invention et/ou la méthode de génération selon l'invention, l'ordinateur comportant de préférence :
a. au moins une unité de stockage informatique dans laquelle le nuage de point est enregistré et une mémoire dans laquelle des instructions pour la mise en œuvre du procédé sont chargés, et
b. un processeur pour exécuter les instructions.

L'invention concerne enfin un module de stockage de données informatique, par exemple un disque dur, dans lequel le modèle 3D, obtenu par le procédé selon l'invention, est enregistré.

L'invention concerne encore une méthode d'affichage sur un écran, par exemple d'un ordinateur, d'une représentation visuelle du modèle 3D. La méthode peut comporter l'affichage d'une carapace virtuelle formée par l'imbrication des objets modèles appariés représentant les blocs correspondants de l'empilement. Elle peut comporter l'affichage du déplacement des blocs, par exemple au moyen d'indicateurs tels des flèches dont la longueur est proportionnelle à l'intensité du déplacement et/ou à une échelle de couleur correspondant à l'intensité du déplacement.

L'invention pourra être mieux comprise à la lecture de la description détaillée qui va suivre, de l'exemple qui sera décrit et dessin annexé dans lequel :
[Fig. 1] : figure 1 est une photographie d'une partie d'une carapace d'une digue formée de blocs « Accropodes II^{®} »,
[Fig. 2] : figure 2 est une vue schématique en coupe verticale d'une représentation d'un nuage de points qui illustre l'acquisition du nuage de points de la carapace,
[Fig. 3] : figure 3 représente la visualisation du nuage de points de la partie immergée de la carapace,
[Fig. 4] : figure 4 illustre schématiquement la voxelisation d'un nuage de points,
[Fig. 5]: figure 5 illustre schématiquement la segmentation du nuage de points et la formation de régions candidates,
[Fig. 6]: figure 6 est une vue d'un objet modèle,
[Fig. 7] : figure 7 et
[Fig. 8]: figure 8 illustrent schématiquement l'appariement d'une région candidate avec un objet modèle,
[Fig. 9] : figure 9 illustre la validation de l'étape d'appariement, et
[Fig. 10] : figure 10 est a) une photographie acquise de manière nadirale d'une partie de la carapace d'une digue et b) une représentation visuelle des objets modèles représentant les blocs de la carapace photographiée en a).

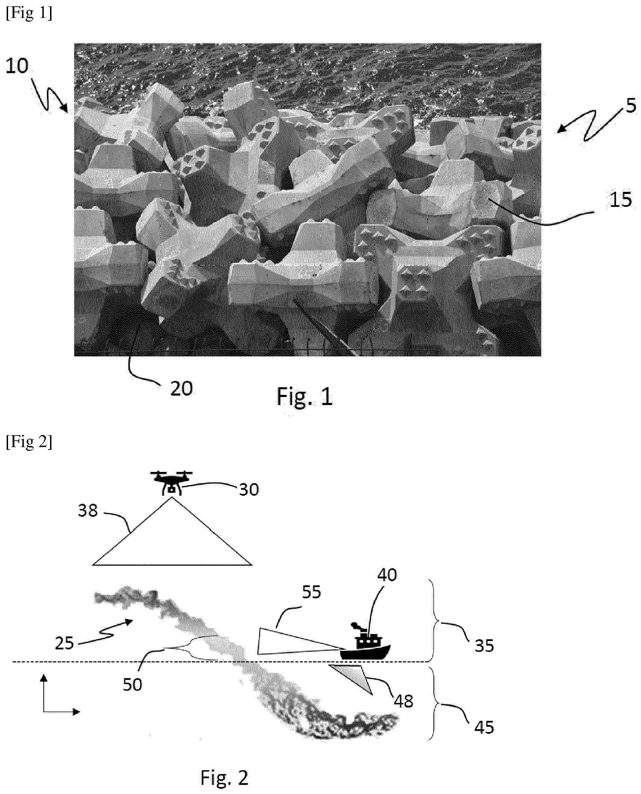

Les figures 1 à 10 illustrent un exemple de mise en œuvre du procédé selon l'invention.

La figure 1 est une photographie d'une carapace 5 d'une digue 10 maritime qui est formée de blocs 15 préfabriqués en béton connus sous l'appellation « Accropodes II^{®} ». Les blocs sont imbriqués les uns dans les autres, si bien que seules des parties d'entre eux sont visibles à un observateur. Par ailleurs, certains blocs, par exemple référencés avec le numéro 20, sont partiellement masqués à l'observateur, car recouverts en partie par d'autres blocs. En outre, des blocs sont disposés en partie émergée tandis que d'autres sont immergés dans l'océan.

Le procédé requiert en entrée un nuage de points représentant au moins une partie de la carapace. Comme cela est illustré sur la figure 2, afin d'acquérir le nuage de points 25 de la carapace, différentes techniques d'acquisition peuvent être mises en œuvre. Par exemple, un lidar peut être monté sur un drone 30 afin d'acquérir un nuage de points de la partie émergée 35 de la carapace selon le cône d'acquisition 38. Tout autre engin qui peut fournir une vision surélevée de la carapace peut bien évidement être utilisé, par exemple une grue, un hélicoptère ou un avion, et un appareil de télédétection optique autre qu'un lidar peut être utilisé, par exemple un appareil d'acquisition photogrammétrique.

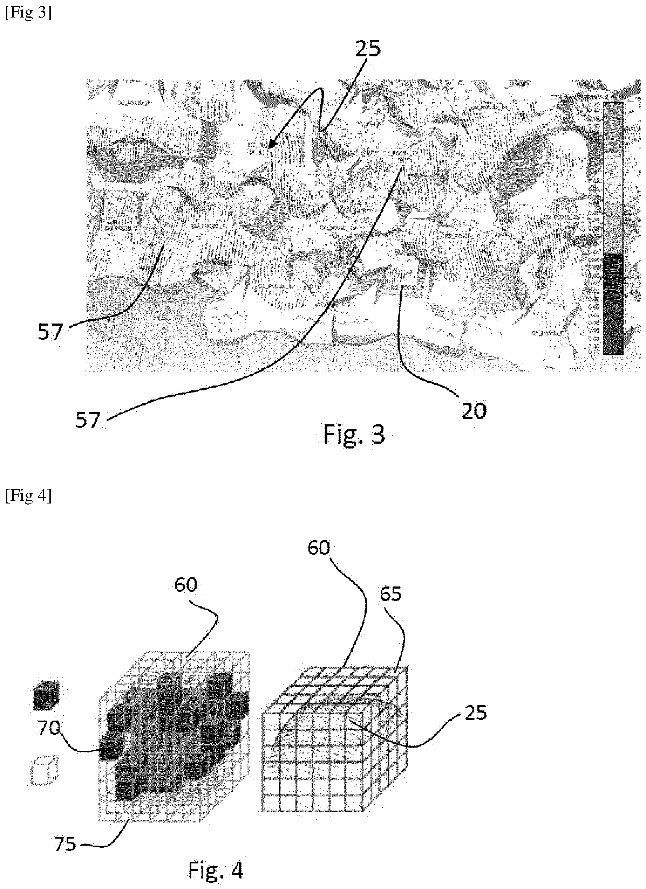

Par ailleurs, un navire 40 peut embarquer un sondeur bathymétrique afin d'acquérir un nuage de points de la partie immergée 45 de la carapace, comme indiqué selon le cône d'acquisition 48. Un tel nuage est représenté sur la figure 3, sur laquelle sont représentés en outre les blocs préfabriqués correspondants pour une meilleure visualisation.

Enfin, une partie des blocs de la carapace est en partie immergée, soumise au marnage et impactée par la houle. Elle est dénommée partie de ligne d'eau 50 de la carapace. Par exemple, un lidar est embarqué sur le navire et peut être dirigé vers la partie de ligne d'eau de la carapace pour acquérir le nuage de points correspondant, comme indiqué par le cône 55. Le nuage de points 25, repéré dans un référentiel local ou absolu, peut être ensuite généré en agglomérant les données des nuages de point de la partie émergée, de la partie de ligne d'eau et de la partie immergée de la carapace.

Comme cela apparaît par exemple sur la figure 3, des blocs 2 de la carapace peuvent être représentés par un faible nombre de points, par exemple parce que ces blocs sont masqués au sondeur bathymétrique par des blocs qui les recouvrent. De tels blocs qui présentent une visibilité, dans le nuage de points, comprise entre 5 % et 10 % peuvent être modélisés. D'autres blocs présentent une visibilité élevée par exemple de l'ordre de 30 % pour les blocs 57.

Le nuage de points peut ensuite être voxelisé comme illustré sur la figure 4 de manière schématique. Une grille 3D 60 formée de voxels 65 est générée dans le même référentiel que le nuage de points. Il est vérifié si un ou plusieurs points du nuage présentent des coordonnées incluses dans le voxel. Si c'est le cas, le voxel 65 est considéré comme rempli, sinon il est considéré comme vide. Par exemple, une valeur de 1 lui est attribuée s'il est rempli (voxel plein 70) et de 0 sinon (voxel vide 75).

Dans l'exemple de mise en œuvre du procédé illustré ici, le côté du voxel choisi pour discrétiser le nuage de points est égal à 2 cm.

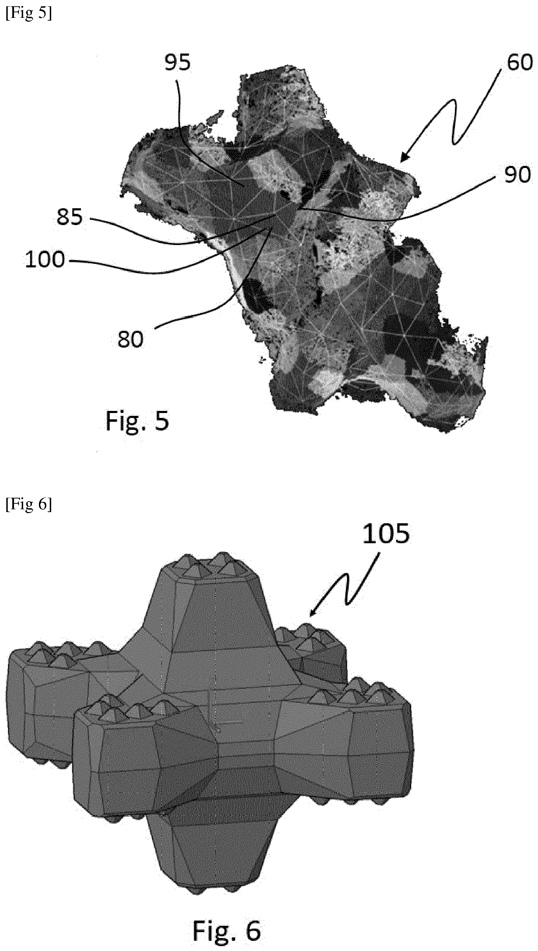

Le nuage de points est ensuite segmenté, au moyen des voxels générés, comme cela est illustré sur la figure 5. Dans l'exemple illustré, la technique de segmentation VCCS est mise en œuvre. Par cette technique, le nuage de points est partitionné en régions homogènes 80, à partir de « super-voxels » propres à la technique VCCS, qui comportent chacune un centre 85 et des sommets 90. Les régions homogènes représentent notamment des portions de la surface d'un bloc. Les régions homogènes peuvent être reliées à des régions homogènes adjacentes 95 par des sommets communs. Les régions homogènes adjacentes représentent d'autres portions d'un même bloc 15. Une région candidate 100 peut ensuite être formée, au moyen d'un graphe d'adjacence fourni par la technique VCCS, qui comporte un ensemble de régions homogènes adjacentes.

En outre, un descripteur de forme de la région candidate, par exemple un descripteur FFPH, est calculé pour en vue de la mise en œuvre de l'appariement.

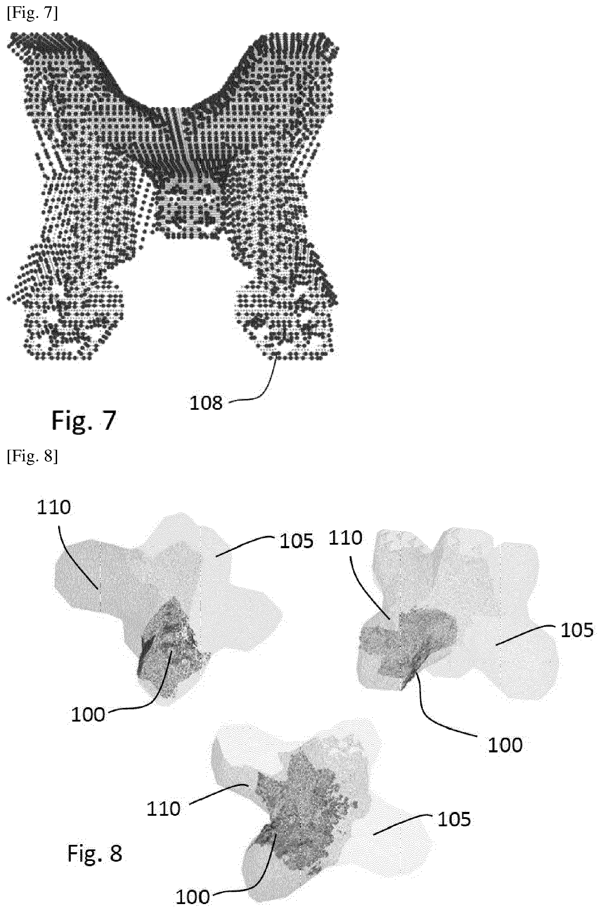

Le procédé selon l'invention vise notamment à apparier, c'est-à-dire à faire correspondre, la région candidate avec un objet-modèle qui représente un bloc préfabriqué. La figure 6 est une représentation d'un objet-modèle 3D 105 qui représente un bloc « Accropodes II^{®} ». L'objet-modèle est par exemple élaboré par conception assistée par ordinateur. Il est ainsi défini vectoriellement au moyen de sommets et de segments joignant les sommets. Un descripteur de forme de l'objet-modèle est calculé, par exemple un descripteur, en vue de l'étape d'appariement. Pour cela, l'objet modèle est discrétisé sous forme d'un nuage de points et des descripteurs de points d'intérêt sont préalablement calculés en vue de déterminer le descripteur de l'objet modèle discrétisé. La figure 7 représente sous formes de flèches 108 des descripteurs de points d'intérêt de l'objet modèle.

L'étape d'appariement est ensuite conduite en mettant en correspondance au moins une partie de l'objet modèle 105 avec la région candidate 100. Notamment, l'étape d'appariement comprend la minimisation de l'écart entre la région candidate et l'objet modèle au moyen d'un algorithme ICP. La figure 8 illustre trois résultats d'appariement entre trois régions candidates différentes et un objet-modèle. Pour chaque résultat sont représentés les régions candidates 100, une partie de l'objet modèle 110 ayant servi à l'appariement et l'intégralité de l'objet modèle 105.

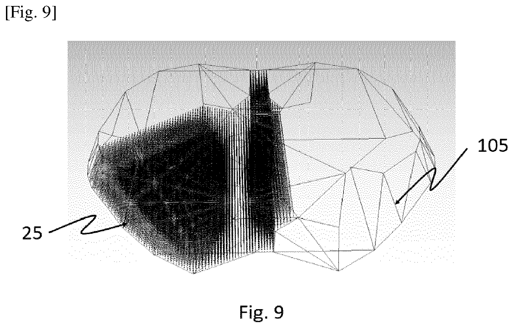

Une validation de la mise en correspondance est ensuite mise en œuvre et est illustrée sur la figure 9. La validation comprend notamment le comptage du nombre de voxels de la région candidate qui sont inclus dans le volume de l'objet modèle. La validation de l'appariement est par exemple considérée concluante lorsque le rapport du nombre de voxels contenus à l'intérieur de l'objet modèle sur le nombre total de voxels de la région candidate est inférieur à un seuil prédéterminé.

La mise en correspondance est ensuite optimisée en agrégeant d'autres régions homogènes à la région candidate, puis en minimisant l'écart entre la région candidate ainsi agrandie et l'objet-modèle. Une telle optimisation est dénommée « Region Growing ». Elle vise à la fois à améliorer la détermination de l'orientation et de la position de l'objet-modèle 3D et à déterminer l'ensemble des régions homogènes qui représentent dans le nuage de points un même bloc préfabriqué.

Une fois l'optimisation est effectuée, la région candidate 100 peut être extraite du nuage de points 60. Le procédé peut être à nouveau mis en œuvre sur une autre région candidate.

La position et l'orientation de l'objet-modèle sont alors enregistrées dans le modèle 3D.

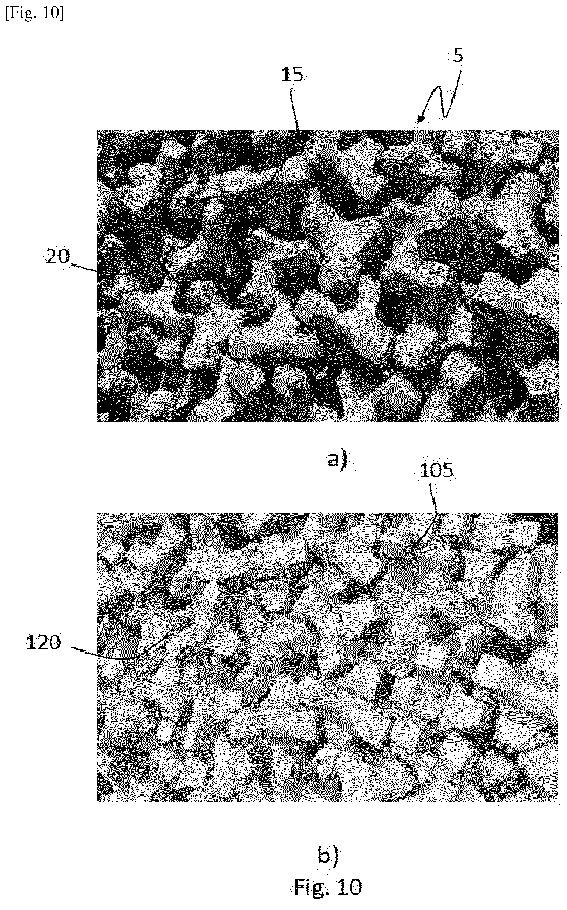

La figure 10 illustre un résultat de mise en œuvre du procédé. La figure 10a) est une photographie de la partie émergée d'une carapace 5 dont un nuage de points a été acquis, et la figure 10b) représente le résultat de la modélisation de cette partie au moyen du nuage de points. Sur la figure 10b), chaque objet-modèle 105 d'un bloc 15 est représenté selon la position et l'orientation correspondantes enregistrées dans le modèle 3D. Comme cela apparait clairement, le modèle 3D reproduit fidèlement et précisément l'imbrication des blocs préfabriqués de la carapace. En outre, le procédé est particulièrement robuste et est apte à modéliser des blocs dont la visibilité est faible. C'est le cas par exemple du bloc référencé par le numéro 20 sur la figure 10a) qui est représenté par l'objet-modèle 120 sur la figure 10b), dont la visibilité est inférieure à 10 %.

Par ailleurs, la mise en œuvre du procédé selon l'invention, au moyen de nuages de points représentant des mêmes blocs d'une carapace à différents instants, permet de suivre l'évolution de la carapace entre ces deux instants. Par exemple, la variation de la position du barycentre et la variation d'orientation de chaque bloc peuvent ainsi être déterminées.

L'invention n'est bien évidemment pas limitée aux modes de mises en œuvre et aux exemples présentés dans la description à titre illustratif et non limitatif.

## Revendications

1. Procédé de génération d'un modèle 3D d'une carapace (5) de blocs (15) préfabriqués en matériau cimentaire, le procédé étant mis en œuvre par ordinateur et comportant :
a) la fourniture d'un nuage de points (25) représentant partiellement la carapace (5),
b) la segmentation du nuage de points en régions homogènes (80) représentant au moins une partie d'un des blocs (15) discrétisés dans le nuage de points,
c) l'agrégation d'au moins deux des régions homogènes (80) qui sont adjacentes pour former une région candidate (100),
d) l'appariement de ladite région candidate (100) avec un objet-modèle 3D (105) représentant au moins une partie d'un bloc (15), et
e) l'enregistrement, dans le modèle 3D de la carapace, de la position et de l'orientation de l'objet-modèle 3D apparié à l'étape d).

2. Procédé selon la revendication 1, comportant postérieurement à l'étape e), la réitération des étapes c) à e) avec une autre région candidate afin d'apparier un objet-modèle représentant un autre des blocs de la carapace.

3. Procédé selon la revendication 2, comportant la suppression de la région candidate du nuage de points.

4. Procédé selon l'une quelconque des revendications 2 et 3, les étapes c) à e) étant réitérées jusqu'à ce que plus de 30%, de préférence plus de 50 %, de préférence plus de 70 %, de préférence plus de 80 %, de préférence plus de 90 %, voire 100 % des blocs de la carapace sont modélisés au moyen chacun d'un objet-modèle correspondant.

5. Procédé selon l'une quelconque des revendications précédentes, l'étape b) comportant :
- la voxelisation du nuage de points (25),
- la formation de groupes de voxels non disjoints et cohérents spatialement, par exemple au moyen d'une méthode de partitionnement « *k*-moyennes », et
- la génération des régions homogènes (80) à partir des groupes de voxels.

6. Procédé selon l'une quelconque des revendications précédentes, la segmentation du nuage de points comportant la génération des régions homogènes (80), aussi dénommées « super-voxels », en mettant en œuvre la technique de segmentation VCCS.

7. Procédé selon l'une quelconque des revendications précédentes, l'objet-modèle 3D étant un maillage ou un nuage de points ou, de préférence, étant défini au moyen de données géométriques vectorielles, l'objet-modèle étant de préférence élaboré par conception assistée par ordinateur, et/ou l'objet-modèle étant repéré, dans le référentiel du nuage de points de la carapace, au moyen de la position de son barycentre et de l'orientation de ses axes principaux.

8. Procédé selon l'une quelconque des revendications précédentes, la région candidate et l'objet-modèle étant mis en correspondance au moyen d'un descripteur de forme de la région candidate et d'un descripteur de forme de l'objet-modèle, , le descripteur de forme de la région candidate étant notamment choisi parmi un descripteur FPFH, acronyme anglais de « Fast Point Feature Histograms », un descripteur PFH, acronyme anglais de « Point Feature Histogram », un descripteur LFSH, acronyme anglais de « Local Feature Statistic Histograms » et un descripteur VFP, acronyme anglais de « Viewpoint Feature Histogram ».

9. Procédé selon la revendication 8, le descripteur de forme de l'objet-modèle étant déterminé :
- en générant un nuage de points représentant au moins une partie de l'objet-modèle, dit objet-modèle discrétisé,
- en définissant des points d'intérêt dans l'objet-modèle discrétisé, puis
- en calculant des descripteurs de points d'intérêt pour chaque point d'intérêt, le descripteur de forme de l'objet-modèle comportant les descripteurs de points d'intérêt.

10. Procédé selon l'une quelconque des revendications précédentes, la mise en correspondance de la région candidate avec l'objet-modèle comportant la minimisation de l'écart entre la région candidate et l'objet-modèle, de préférence par mise en œuvre d'un algorithme du point itératif le plus proche.

11. Procédé selon l'une quelconque des revendications précédentes, l'étape d) d'appariement comportant une validation de la mise en correspondance, notamment par comptage du nombre de points de la région candidate inclus dans le volume de l'objet-modèle et comparaison dudit nombre de points à un seuil prédéterminé,
de préférence l'étape d) d'appariement comportant, de préférence postérieurement à la validation de la mise en correspondance, une optimisation de la mise en correspondance de l'objet-modèle 3D avec la région candidate,
l'optimisation comportant de préférence l'agrandissement de l'aire de la région candidate en mettant en œuvre au moins un cycle d'optimisation comportant :
i) l'agrégation à la région candidate d'au moins une, voire de plusieurs régions homogènes qui lui sont adjacentes,
ii) la minimisation de l'écart entre la région candidate ainsi agrandie et l'objet-modèle, et
iii) le calcul d'un résidu de minimisation dudit écart,
le cycle d'optimisation étant réitéré avec une ou plusieurs autres régions homogènes et avec la région candidate agrandie à l'étape ii) tant que ledit résidu calculé l'étape iii) est inférieur à un seuil prédéterminé, par exemple compris entre 1 mm et 15 mm.

12. Procédé selon l'une quelconque des revendications précédentes, selon lequel au moins 90 %, voire au moins 95 %, mieux 100 % en nombre des blocs représentés dans le nuage de points qui présentent une visibilité supérieure ou égale à 25 %, voire supérieure ou égale à 20 %, sont représentés dans le modèle 3D de la carapace, et/ou comportant l'attribution d'un identifiant, par exemple alphanumérique, par exemple un nom, à l'objet modèle 3D enregistré à l'étape e).

13. Procédé selon l'une quelconque des revendications précédentes, comportant une étape préalable d'acquisition du nuage de points, l'acquisition du nuage de points de la carapace comportant de préférence:
- une acquisition d'au moins un nuage de points de la partie émergée de la carapace et/ou une acquisition d'au moins un nuage de points de la partie immergée de la carapace,
- optionnellement, la fusion du nuage de points de la partie émergée et du nuage de points de la partie immergée, le nuage de points de la partie immergée de la carapace et le nuage de point de la partie émergée de la carapace présentant par exemple des densités de points différentes et/ou des précisions de mesure des positions des points différentes.

14. Méthode de suivi du déplacement des blocs d'une carapace, comportant :
- la mise en œuvre du procédé selon l'une quelconque des revendications précédentes en fournissant à l'étape a) un premier nuage de points représentant la carapace à un premier instant, afin de générer un premier modèle 3D de la carapace,
- la mise en œuvre du procédé selon l'une quelconque des revendications précédentes en fournissant à l'étape a) un deuxième nuage de points représentant la carapace à un deuxième instant, afin de générer un deuxième modèle 3D de la carapace, et
- le calcul du déplacement d'au moins un, de préférence de tous les objets-modèle appariés communs aux premier et deuxième modèles 3D entre les premier et deuxième instants.

15. Méthode de génération d'un modèle 3D consolidé d'une carapace, comportant :
- la mise en œuvre du procédé selon l'une quelconque des revendications 1 à 13 en fournissant à l'étape a) un premier nuage de points représentant une première portion de la carapace, afin de générer un premier modèle 3D de la carapace,
- la mise en œuvre du procédé selon l'une quelconque des revendications 1 à 13 en fournissant à l'étape a) un deuxième nuage de points représentant une deuxième portion de la carapace connexe à la première portion de la carapace, afin de générer un deuxième modèle 3D de la carapace, et
- l'assemblage des premier et deuxième modèles 3D pour former le modèle 3D consolidé.

16. Ordinateur pour mettre en œuvre le procédé selon l'une quelconque des revendications 1 à 13 et/ou la méthode de suivi selon la revendication 14 ou la méthode de génération selon la revendication 15, l'ordinateur comportant de préférence :
a. au moins une unité de stockage informatique dans laquelle le nuage de point est enregistré et une mémoire dans laquelle des instructions pour la mise en œuvre du procédé sont chargés, et
b. un processeur pour exécuter les instructions.

17. Module de stockage de données informatique, par exemple un disque dur, dans lequel le modèle 3D obtenu par le procédé selon l'une quelconque des revendications 1 à 13, est enregistré.

18. Méthode d'affichage sur un écran, par exemple d'un ordinateur, d'une représentation visuelle du modèle 3D obtenu par le procédé selon l'une quelconque des revendications 1 à 13.
